# EUROPÄISCHE PATENTANMELDUNG

(11) **EP 1 992 940 A1**
(43) Veröffentlichungstag der Anmeldung: **19.11.2008**
(21) Anmeldenummer: 08002610.7
(22) Anmeldetag: 13.02.2008
(51) Int. Cl.: G01N 25/72

(54) **Verfahren zur Untersuchung einer auf einem Bremsenprüfstand rotierenden Bremsscheibe auf oberflächennahe Fehlstellen**

(30) Priorität: 16.05.2007 DE 102007023136
(71) Anmelder: AUDI AG, 85045 Ingolstadt (DE)
(72) Erfinder: Waninger, Robert, 85055 Ingolstadt (DE); Hantschke, Christopher, 01187 Dresden (DE)
(74) Vertreter: Asch, Konrad

(57) **Zusammenfassung**

Die Erfindung betrifft ein Verfahren zur Untersuchung einer auf einem Bremsenprüfstand (14) rotierenden Bremsscheibe (12) auf oberflächennahe Fehlstellen mittels eines Thermographie-Verfahrens. Hierzu wird zunächst ein Bremsvorgang zur Erwärmung der Bremsscheibe (12) durchgeführt. Die rotierende Bremsscheibe (12) wird mit einer Kaltluftquelle (18) aktiv gekühlt und mit einer Infrarotkamera (16) sektorweise beidseitig thermographisch erfasst. Anschließend werden die sektorweise erfassten thermographischen Daten zur Auswertung an einen Steuer- und Auswerterechner (20) übermittelt.

## Beschreibung

Die Erfindung betrifft ein Verfahren zur Untersuchung einer auf einem Bremsenprüfstand rotierenden Bremsscheibe auf oberflächennahe Fehlstellen mittels Wärmefluss-Thermographie-Verfahren gemäß dem Patentanspruch 1 sowie eine Vorrichtung zur Untersuchung von Bremsscheiben auf oberflächennahe Fehlstellen gemäß dem Patentanspruch 6.

Um oberflächennahe Fehlstellen in Bremsscheiben zu detektieren, kommen bisher aktive thermographische Untersuchungsmethoden zum Einsatz, wobei das Bauteil durch eine externe Energiezufuhr angeregt und das thermische Antwortverhalten als Temperaturverteilung auf der Oberfläche ausgewertet wird.

Dazu wird das Prüfobjekt ruhend auf einem Tisch platziert und aktiv mit Wärmeenergie beaufschlagt, wodurch eine thermische Wärmefront in das Prüfobjekt eindringt, deren Transport ins Innere des Materials an eventuell vorhandenen Fehlstellen behindert wird.

Während einer Analyse des Abkühlungsverlaufs auf der Oberfläche des Prüfobjekts mittels Infrarotkamerasystemen und softwareseitiger Auswertung heben sich Bereiche oberhalb der Fehlstellen aufgrund unterschiedlicher Temperatur vom Rest der Oberfläche ab und können so identifiziert werden.

Die bisherige Untersuchung erfolgt bei einer relativ geringen Bauteiltemperatur, um mit den derzeit verfügbaren Wärmequellen ausreichend Energie in die Bremsscheibe einzuleiten und so zu gewährleisten, dass die Wärmefront bis zu den Fehlstellen vordringen kann. Eine Untersuchung an aufgeheizten Bremsscheiben nach einem Bremsprüfzyklus ist somit mit den bisherigen Thermographie-Verfahren nicht zufrieden stellend möglich und auf dem Bremsenprüfstand deshalb nicht implementiert.

Bisher müssen daher die Bremsscheiben nach deren Abkühlung aus dem Bremsenprüfstand ausgebaut und zur Thermographie-Prüfeinrichtung verbracht werden. Dabei entstehen ein hoher personeller sowie zeitlicher Aufwand und eine schlechte Auslastung der teuren Bremsenprüfstände. Eine Thermographie-Untersuchung von Bremsscheiben zur Erkennung eventuell vorhandener oberflächennaher Fehlstellen im Material ist zu diesem Zeitpunkt lediglich an ausgebauten und in einem extra Prüfraum befindlichen Bremsscheiben geringerer Temperatur möglich. Außerdem ist eine Dokumentation einer sich verändernden Fehlstelle nur nach mehreren Bremszyklen sinnvoll, da der Ein-/Ausbauaufwand zu hoch würde.

In der DE 199 40 463 A1 ist ein Verfahren zum Bestimmen einer Temperaturverteilung auf wenigsten einer Reiboberfläche einer rotierenden Bremsscheibe während und/oder nach der Einwirkung eines Reibbelags offenbart. Als nachteilig erweist sich bei dem Verfahren der verhältnismäßig aufwendige Mess- und Auswertevorgang

Der Erfindung liegt die Aufgabe zugrunde, unter Vermeidung der genannten Nachteile ein Verfahren zur Untersuchung einer auf einem Bremsenprüfstand rotierenden, aufgeheizten Bremsscheibe auf oberflächennahe Fehlstellen mittels Wärmefluss-Thermographie-Verfahren zur Verfügung zu stellen.

Diese Aufgabe wird durch die Merkmale des Anspruches 1 gelöst.

Die Unteransprüche 2 bis 5 bilden vorteilhafte Weiterbildungen des erfindungsgemäßen Verfahrens.

Der Erfindung liegt weiterhin die Aufgabe zugrunde, eine Vorrichtung zur Untersuchung von Bremsscheiben auf oberflächennahe Fehlstellen zur Verfügung zu stellen, so dass eine einfache und sichere Durchführung des Verfahrens zur Ermittlung oberflächennaher Fehlstellen in einer Bremsscheibe gewährleistet ist.

Diese Aufgabe wird durch die Merkmale des Anspruches 6 gelöst.

Die Unteransprüche 7 und 8 bilden vorteilhafte Weiterbildungen der erfindungsgemäßen Vorrichtung.

Erfindungsgemäß wird bei dem Verfahren zur Untersuchung einer auf einem Bremsenprüfstand rotierenden Bremsscheibe auf oberflächennahe Fehlstellen mittels Wärmefluss-Thermographie-Verfahrens zunächst ein Bremsvorgang zur Erwärmung der Bremsscheibe durchgeführt. Anschließend wird die rotierende Bremsscheibe mit einer Kaltluftquelle aktiv gekühlt und die rotierende Bremsscheibe wird mit einer Infrarotkamera sektorweise thermographisch erfasst. Die sektorweise erfassten thermographischen Daten werden anschließend zur Auswertung an einen Steuer- und Auswerterechner übermittelt.

Durch das erfindungsgemäße Verfahren ist es nunmehr in vorteilhafter Weise möglich, die Bremsscheibe während oder direkt im Anschluss an einen Bremsvorgang auf dem Bremsenprüfstand auf Fehlstellen zu untersuchen. Es muss nicht mehr bis zur Abkühlung des Prüfobjekts bis auf Raumtemperatur gewartet werden, die Bremsscheibe ausgebaut und diese anschließend zu einer Prüfanlage verbracht werden.

Um eine Auswertung der gewonnenen Daten zu erleichtern, werden vorzugsweise die sektorweise erfassten thermographischen Daten in dem Steuer- und Auswerterechner softwareseitig nachbearbeitet und zu einem Abbild der kompletten Bremsscheibe zusammengefasst.

Gemäß einer besonders vorteilhaften Ausgestaltung der Erfindung wird die Bremsscheibe mit mehreren gleichmäßig über den Umfang der Bremsscheibe verteilten, die Bremsscheibe in gleichmäßige Sektoren einteilenden Signalgebern versehen und die Infrarotkamera wird durch die von den Signalgebern erzeugten Trigger-Signale und dem Steuer- und Auswerterechner gesteuert. Auf eine einfache Art und Weise ist mittels der von den Signalgebern erzeugten Trigger-Signale und dem Steuer- und Auswerterechner die sektorweise Erfassung der Bremsscheibe durch die Infrarotkamera sichergestellt.

Um besonders hochwertige Ergebnisse zu erzielen, wird vorzugsweise die Bremsscheibe durch ein modulierbares Gebläse aktiv gekühlt und als Wärmefluss-Thermographie-Verfahren wird das Verfahren der Lock-in-Thermographie angewendet.

In vorteilhafter Weise werden durch eine Einspiegelung der der Infrarotkamera abgewandten Seite beide Seiten der Bremsscheibe mittels einer einzigen Infrarotkamera thermographiert.

Die Vorrichtung zur Untersuchung von Bremsscheiben auf oberflächennahe Fehlstellen umfasst einen Bremsenprüfstand zur Aufnahme, Antrieb und Abbremsen der Bremsscheibe, eine Infrarotkamera zur thermographischen Erfassung der Bremsscheibe, eine Kaltluftquelle zur aktiven Kühlung der Bremsscheibe, einen Steuer- und Auswerterechner zur Auswertung der erfassten thermographischen Daten sowie Datenleitungen, über die der Bremsenprüfstand, die Infrarotkamera und die Kaltluftquelle mit dem Steuer- und Auswerterechner verbunden sind.

Vorzugsweise ist die Kaltluftquelle als ein modulierbares Gebläse ausgebildet. Die Ausbildung der Kaltluftquelle als ein modulierbares Gebläse hat den Effekt, dass als Wärmefluss-Thermographie-Verfahren das Verfahren der Lock-in-Thermographie anwendbar ist.

Gemäß einer besonders vorteilhaften Ausbildung der Erfindung ist im Bereich der Bremsscheibe ein Spiegel zur Einspiegelung der Rückseite der Bremsscheibe angeordnet. Dies hat den Vorteil, dass mit einer einzigen Inrarotkamera sowohl die Vorderseite als auch die Rückseite der Bremsscheibe thermographiert werden kann.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden an Hand des in der Zeichnung dargestellten Ausführungsbeispiels näher beschrieben.

In der Beschreibung, in den Patentansprüchen, in der Zusammenfassung und in der Zeichnung werden die in der unten aufgeführten Liste der Bezugszeichen verwendeten Begriffe und zugeordnete Bezugszeichen verwendet. In der Zeichnung bedeuten:

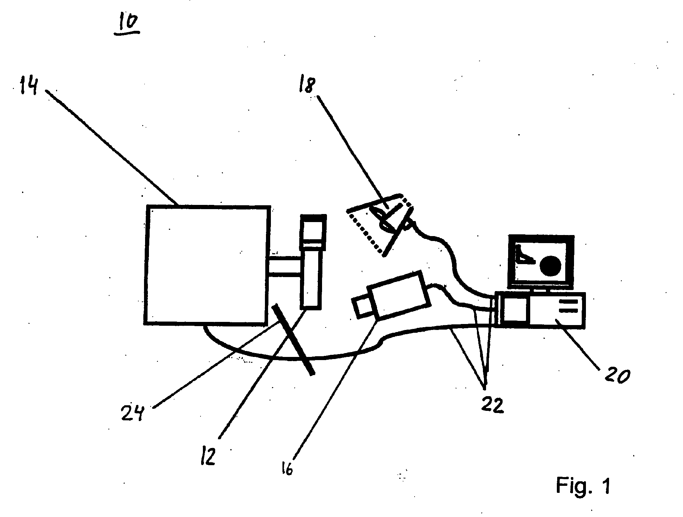

- Fig. 1: eine Vorrichtung zur Untersuchung von Bremsscheiben auf oberflächennahe Fehlstellungen.

Die mehr oder minder schematisch und insgesamt mit Bezugsziffer 10 bezeichnete Vorrichtung zur Untersuchung von Bremsscheiben 12 auf oberflächennahe Fehlstellen umfasst im Wesentlichen einen Bremsenprüfstand 14 zur Aufnahme, Antrieb und Abbremsen der Bremsscheibe 12, eine Infrarotkamera 16 zur thermographischen Erfassung der Bremsscheibe 12, eine Kaltluftquelle 18 zur aktiven Kühlung der Bremsscheibe 12, ein Steuer- und Auswerterechner 20 zur Auswertung der erfassten thermographischen Daten sowie Datenleitungen 22, über die der Bremsenprüfstand 14, die Infrarotkamera 16 und die Kaltluftquelle 18 mit dem Steuer- und Auswerterechner 20 verbunden sind.

Vorliegend ist die Kaltluftquelle 18 als ein modulierbares Gebläse ausgebildet und als Wärmefluss-Thermographieverfahren wird das Verfahren der Lock-in-Thermographie angewendet.

Die Untersuchung der Bremsscheibe 12 auf oberflächennahe Fehlstellen beginnt nach einem Bremsvorgang mit einer geringen zeitlichen Verzögerung, damit sich die inhomogene Temperaturverteilung innerhalb der Bremsscheibe 12 nach einem Bremsvorgang ausgleichen kann, so dass eine nahezu homogene Temperaturverteilung zu Beginn der Messung vorliegt.

Anschließend wird die Oberfläche der aufgewärmten Bremsscheibe 12 durch das modulierbare Gebläse 18, das auf einen begrenzten Bereich des Bremsscheibenreibrings gerichtet ist, aktiv gekühlt (Wärmeentzug durch Konvektion).

Aufgrund der Drehung der Bremsscheibe 12 mit einer geeigneten, konstanten Winkelgeschwindigkeit wird der gesamte Reibring ausreichend homogen gekühlt. Die Folge davon ist, dass die Oberfläche der Bremsscheibe 12 eine geringere Temperatur als das Innere der Bremsscheibe 12 aufweist.

Anschaulich gesprochen wandert in Abhängigkeit des Wärmeleitvermögens des Materials der Bremsscheibe 12 eine Kühlfront in das Innere der Bremsscheibe 12. Somit entsteht ein Temperaturgefälle in Abhängigkeit vom aufgebrachten Wärmestrom und der Temperatur der Bremsscheibe 12.

Befinden sich Fehlstellen im oberflächennahen Bereich der Bremsscheibe 12, so treten diese bei der anschließenden Auswertung des Temperaturverlaufs auf der Oberfläche über der Zeit im Thermographie-Bild als abgrenzbarer Bereich hervor, da sie den Wärmetransport aufgrund abweichender thermischer Eigenschaften beeinflussen.

Da auf dem Bremsenprüfstand 14 ein Bremsscheibenbereich durch den Bremssattel verdeckt ist und in der Regel das Sichtfeld der Infrarotkamera 16 durch Teile des Bremsenprüfstands 14 eingeschränkt ist, ist es lediglich möglich nur einen Ausschnitt der Bremsscheibe 12 zu thermographieren. Um jedoch die komplette Bremsscheibe 12 thermographisch zu erfassen, werden vorliegend drei Signalgeber gleichmäßig auf dem Umfang der Bremsscheibe 12 verteilt. Die Infrarotkamera 16 wird anschließend durch die von den Signalgebern erzeugten Trigger-Signalen und dem Steuer- und Auswerterechner 20 gesteuert.

Die zeitliche Auswertung der erfassten Thermographiebilder erfolgt jeweils über jedes dritte Bild. Somit werden drei Thermographiebilder erzeugt, die jeweils einen Ausschnitt der Bremsscheibe 12 abbilden. Durch eine softwareseitige Nachbearbeitung können die drei Bilder zu einer kompletten Bremsscheibe 12 zusammengesetzt werden.

Durch die Einspiegelung einer Seite mit Hilfe eines polierten Aluminium-Spiegels 24 werden mit nur einer Infrarotkamera 14 beide Seiten der Bremsscheibe thermographiert.

### B E Z U G S Z E I C H E N L I S T E

- 10: Vorrichtung zur Untersuchung von Bremsscheiben
- 12: Bremsscheibe
- 14: Bremsenprüfstand
- 16: Infrarotkamera
- 18: Kaltluftquelle
- 20: Steuer- und Auswerterechner
- 22: Datenleitungen
- 24: Spiegel

## Patentansprüche

1. Verfahren zur Untersuchung einer auf einem Bremsenprüfstand (14) rotierenden Bremsscheibe (12) auf oberflächennahe Fehlstellen mittels Wärmefluss-Thermographie-Verfahren, umfassend die folgenden Verfahrensschritte:
- Durchführung eines Bremsvorgangs zur Erwärmung der Bremsscheibe (12),
- aktive Kühlung der rotierenden Bremsscheibe (12) mit einer Kaltluftquelle (18),
- sektorweise thermographische Erfassung der rotierenden Bremsscheibe (12) mit einer Infrarotkamera (16),
- Übermittlung der sektorweise erfassten thermographischen Daten an einen Steuer- und Auswerterechner (20),
- Auswertung der sektorweise erfassten thermographischen Daten in dem Steuer- und Auswerterechner (20).

2. Verfahren nach Anspruch 1, **dadurch gekennzeichnet, dass** die sektorweise erfassten thermographischen Daten in dem Steuer- und Auswerterechner (20) softwareseitig nachbearbeitet und zu einem Abbild der kompletten Bremsscheibe (12) zusammengefasst werden.

3. Verfahren nach den Ansprüchen 1 und 2, **dadurch gekennzeichnet, dass** die Bremsscheibe (12) mit mehreren gleichmäßig über den Umfang der Bremsscheibe (12) verteilten, die Bremsscheibe (12) in gleichmäßige Sektoren einteilenden Signalgebern versehen wird, und dass zur sektorweise thermographischen Erfassung der rotierenden Bremsscheibe (12) die Infrarot-Kamera (16) durch von den Signalgebern erzeugte Trigger-Signale und dem Steuer- und Auswerterechner (20) gesteuert wird.

4. Verfahren nach den Ansprüchen 1 bis 3, **dadurch gekennzeichnet, dass** die Bremsscheibe (12) durch ein modulierbares Gebläse (18) aktiv gekühlt wird und als Wärmefluss-Thermographie-Verfahren das Verfahren der Lock-In-Thermographie angewendet wird.

5. Verfahren nach einem der vorstehenden Ansprüche, **dadurch gekennzeichnet, dass** durch eine Einspiegelung der der Infrarotkamera (16) abgewandten Seite der Bremsscheibe (12) beide Seiten der Bremsscheibe (12) mittels einer Infrarotkamera (16) thermographiert werden.

6. Vorrichtung zur Untersuchung von Bremsscheiben auf oberflächennahe Fehlstellen, umfassend
- einen Bremsenprüfstand (14) zur Aufnahme, Antrieb und Abbremsen der Bremsscheibe (12),
- eine Infrarotkamera (16) zur thermographischen Erfassung der Bremsscheibe (12),
- eine Kaltluftquelle (18) zur aktiven Kühlung der Bremsscheibe,
- ein Steuer- und Auswerterechner (20) zur Auswertung der erfassten thermographischen Daten, sowie
- Datenleitungen (22), über die der Bremsenprüfstand (14), die Infrarotkamera (16) und die Kaltluftquelle (18) mit dem Steuer- und Auswerterechner (20) verbunden sind.

7. Vorrichtung nach Anspruch 6, **dadurch gekennzeichnet, dass** die Kaltluftquelle (18) als ein modulierbares Gebläse ausgebildet ist.

8. Vorrichtung nach den Ansprüchen 6 und 7, **dadurch gekennzeichnet, dass** im Bereich der Bremsscheibe (12) ein Spiegel (24) zur Einspiegelung der Rückseite der Bremsscheibe (12) angeordnet ist.
